# EUROPÄISCHE PATENTSCHRIFT

(11) **EP 2 082 644 B1**
(45) Veröffentlichungstag und Bekanntmachung des Hinweises auf die Patenterteilung: **31.07.2013**
(21) Anmeldenummer: 09000139.7
(22) Anmeldetag: 08.01.2009
(51) Int. Cl.: A01K 1/035, A01K 39/01

(54) **Halte- und Befestigungselement für das Halten, Aufhängen oder Befestigen eines Futterkörpers**
Holding and attachment element for holding, hanging or attaching a feed body
Elément de maintien et de fixation pour la retenue, la suspension ou la fixation d'un corps de nourriture

(30) Priorität: 25.01.2008 DE 102008006230
(43) Veröffentlichungstag der Anmeldung: 29.07.2009
(73) Patentinhaber: Vitakraft-Werke Wührmann & Sohn GmbH & Co. KG, 28295 Bremen (DE)
(72) Erfinder: Wührmann, Heiko, 28832 Achim (DE)
(74) Vertreter: Lins, Martina

(56) Entgegenhaltungen:
- EP-A- 0 094 355
- DE-A1- 4 115 645
- US-A- 4 602 757
- US-A- 5 755 178
- US-A- 6 085 691

## Beschreibung

Die Erfindung betrifft ein Halte- und Befestigungselement, mit dem ein Körper gehalten oder aufgehängt und dabei gegebenenfalls befestigt werden kann. Besonders geeignet ist die Erfindung für die Halterung und/oder Befestigung von Futterkörpern, speziell für Kleintiere wie Vögel oder Nager. Diese Futterkörper werden den Tieren als Nahrung und Knabberzeug, häufig gleichzeitig mit Spiel- und Beschäftigungsfunktion angeboten.

Die Futterkörper können die Form von Futterstangen haben, in dieser Form gibt es z. B. Körnerstangen. Bekannt sind auch kompakte beispielsweise quaderförmige Presskörper und andere keksartige Gebilde. Als Naturfutter lassen sich zum Beispiel Maiskolben einsetzen.

Da die Tiere in der Regel in Käfigen gehalten werden, ist es vorteilhaft, wenn die Futterkörper im Käfig aufgehängt bzw. an Käfigteilen befestigt werden können. Dies gilt auch für Salzsteine, gepresste Mineralien und Wetz- und Nagesteine; auch diese sollten im Käfig festgemacht werden.

Die einfachsten und schon lange bekannten Aufhängungen bestehen aus Draht, der im oder am aufzuhängenden Körper verankert wird. Dabei können die Körper mit zwei Drähten angebunden werden, oder ein festerer Draht ist zu einem Haken geformt. Diese Aufhänger haben grundsätzlich den Nachteil, dass die aufgehängten Körper dem Tier keinen Widerstand zum Nagen oder Picken bieten. Es sind daher schon Befestigungsmittel entwickelt worden, die es erlauben, dem Futterkörper beim Festmachen - z. B. an einer Käfigstange - festen Halt zu geben.

Aus der U.S.-A-5755178 ist eine Anordnung zur Fütterung von Wildtieren bekannt, bei der der Futterblock, beispielsweise ein Maiskolben, auf einen gebogenen Stab aufgeschraubt wird, der wiederum in einen Baum eingeschraubt werden kann. Es ist vorgesehen, dass der Halter zunächst in einen Baum eingeschraubt wird und dass der Futterkörper danach auf das andere Ende des Halters aufrechtstehend aufgesteckt oder aufgeschraubt wird.

Aus der DE 41 15 645 C2 ist eine Aufhängung für Futterkörper in Form eines Clips aus einem flachen Rahmen und einer im Rahmeninneren angeordneten Federzunge bekannt. Mit Hilfe der Federzunge ist es möglich, die Aufhängung so am Käfig festzumachen, dass sie sicher befestigt ist und der Futterkörper beim Nagen oder Picken nicht ausweichen kann. Zur Verankerung der Aufhängung in dem Futterkörper ist bei der DE 41 15 645 C2 eine flache, vorzugsweise geriffelte Lasche vorgesehen.

Während die vorgeschlagene Aufhängung festen Halt bietet, kann die Verankerung in dem Futterkörper noch problematisch sein. Besonders bei natürlichem Futter kann die Festigkeit des Futterkörpers unterschiedlich ausfallen. So ist der Kern z. B. bei Maiskolben spröde und faserig und je nach Qualität und Alter der Maiskolben verschieden hart. Wird nun der Kern des Maiskolbens axial mit einer Bohrung versehen und die oben genannte geriffelte Lasche eingeführt, kann es vorkommen, dass diese Verankerung teilweise gut hält, sich durch die Rüttelbewegungen beim Nagen oder Picken in anderen Fällen jedoch löst, so dass der Maiskolben herunterfällt.

Die Aufgabe der Erfindung bestand darin, die Nachteile im Stand der Technik zu überwinden und eine dauerhaft haltbare Verankerung für die Aufhängung, Halterung oder Befestigung eines Futterkörpers insbesondere in einem Käfig zur Verfügung zu stellen.

Diese Aufgabe wird gemäß Anspruch 1 gelöst, indem an einem Halte- und Befestigungselement für das Halten, Aufhängen oder Befestigen eines Körpers, insbesondere eines Futterkörpers ein Anker zur Verankerung des Halte- und Befestigungselements in dem Körper und ein mit dem Ankerteil verbundenes Halteteil in Form eines Griffs oder eines Aufhängers vorgesehen ist, wobei der Anker aus einem Ankerkörper und von diesem kammartig vorstehenden Lamellen besteht.

Aus der U.S.-A-4602757 ist ein Halter für einen mineralischen Futterstein, insbesondere für Papageienvögel bekannt, der an den Stangen eines Käfigs so befestigt werden soll, dass er ins Innere des Käfigs hineinragt und dort für den Vogel frei zugänglich ist. Auch hier ist vorgesehen, dass der Mineralstein aufrechtstehend gehaltert wird und dass der Halterstab von unten in den Mineralstein eingeschraubt wird.

Die Unteransprüche beziehen sich auf vorteilhafte Ausgestaltungen der Erfindung.

Grundsätzlich kann an dem Halte- und Befestigungselement jedes beliebige Halterungsteil vorgesehen sein, mit dem ein Futterkörper in einem Käfig aufgehängt oder befestigt werden kann und an dem der Futterkörper gegebenenfalls auch von Hand gehalten werden kann. Wie oben beschrieben sind für Griffe und Aufhänger schon die verschiedensten Ausführungsformen bekannt, unter anderem kann die aus der DE 41 15 645 C2 bekannte Aufhängung verwendet werden, die gleichzeitig den Vorteil hat, dass sie durch die flache Form auch gut als Griff geeignet ist. Der Futterkörper kann dadurch leichter aus der Verpackung herausgenommen werden, und es ist auch eine Fütterung von Hand möglich, was bei einer Drahtaufhängung zumindest unkomfortabel ist.

Der Anker, d.h. der Teil des Halte- und Befestigungselementes, der in den zu befestigenden Körper eingebracht wird, besteht aus einem Ankerkörper, der grundsätzlich jede Form besitzen kann, die eine Verankerung ermöglicht, und von diesem Ankerkörper kammartig vorstehenden Lamellen.

Die Verankerung in dem Futterkörper oder dem sonstigen zu befestigenden Körper kann geschehen, indem der Anker vor allem bei weichen Körpern in den Körper eingedrückt, selbstschneidend eingeschraubt oder in eine geeignete Vorbohrung eingesteckt oder geschraubt wird. Die Form des Ankerkörpers wird daher in der Regel gestreckt sein. Neben der allgemein zylindrischen oder auch mehrkantigen Form einer Ankerstange, bietet sich an, dass der Ankerkörper kegelförmig, kegelstumpfförmig oder sonst konisch zulaufend, aber auch zylindrisch vorne zugespitzt oder im weitesten Sinne kolbenförmig ist.

Von dem Ankerkörper gehen seitliche Lamellen ab, die von der Oberfläche des Körpers kammartig vorstehen oder auch seitlich abstehen. Dies soll heißen, dass sie im Wesentlichen rechtwinklig oder quer zur Oberfläche des Ankerkörpers abstehen, wobei die Höhe der Lamelle, die dem Abstand zwischen Ankerkörperoberfläche und Einhüllender der Lamellenoberkanten entspricht, vorzugsweise größer als ihre Breite im Fußbereich, am Übergang zwischen Ankerkörperoberfläche und Lamelle, ist.

Allgemein sind Lamellen blattartig dünne Gebilde, die bei der Erfindung allgemein im Wesentlichen quer zur Längsachse des Ankerkörpers angeordnet sind. In einem Fuß- oder Anschlussbereich kann die Lamelle breiter auslaufen.

Gemäß einer bevorzugten Ausführungsform werden die Lamellen durch eine spiralförmig um den Ankerkörper verlaufende Lamelle gebildet. Der Anker erhält dadurch die Form einer Schraube. Allerdings können auch zwei oder mehr Spiralen parallel verlaufen, eine Lamelle kann mehrfach unterbrochen sein, so dass mehrere Lamellen spiralförmig hintereinander angeordnet sind, oder es kann an einem Ankerkörper eine spiralförmige Lamelle mit anderen Lamellenformen kombiniert werden. Die spiralförmige Ausführungsform hat den Vorteil, dass die Lamelle in sich sehr stabil ist und die Verankerung durch sie große Festigkeit bekommt.

Gemäß einer weiteren vorteilhaften Ausführungsform sind die Lamellen ringförmig, d. h. jeweils in sich geschlossen um den Ankerkörper herum ausgeführt. Alternativ können die Lamellen auch durch einzelne lamellenförmige Spreizzungen gebildet werden.

Für die Verwendung des erfindungsgemäßen Halte- und Befestigungselements ist vorgesehen, dass der Ankerteil in axialer Richtung in einen Futterkörper, sofern dieser weich genug ist, direkt mit Kraft unter Verdrängung der Futterkörpermasse eingedrückt wird, oder vorzugsweise ist vorgesehen, dass der Futterkörper oder der sonstige zu befestigende Körper mit einer Vorbohrung versehen ist, deren Durchmesser größer ist als der Durchmesser des Ankerkörpers über wenigstens die Hälfte bis zwei Drittel seiner Länge, jedoch etwas kleiner ist als der Durchmesser der Einhüllenden der Lamellenoberkanten, zumindest im oberen aufhängungsseitigen Drittel oder Viertel des Ankerteils.

Wird nun das Halte- und Befestigungselement mit seinem Ankerteil in die Vorbohrung des Futterkörpers gedrückt, so biegen sich die Lamellen, die nicht völlig starr sein dürfen, d. h. die etwas elastisch sein müssen, leicht nach hinten von der Eindrückrichtung weg. In dieser Position verbleiben sie während des verankerten Zustands und verhindern nach Art von Widerhaken, dass das Halte- und Befestigungselement wieder herausgezogen werden kann. Es entsteht eine sehr feste Verankerung, die sich durch die Lamellen auch bereichsweise unterschiedlich festen Futterkörpermaterialien anpasst.

Die erfindungsgemäße Verankerung hat große Vorteile in nichthomogenen Materialien oder solchen Materialien, deren Festigkeit und mechanische Eigenschaften chargenweise schwanken. Sie ist daher auch besonders geeignet für natürliche Futtermaterialien, wie Naturfutter-Presskörper oder Maiskolben.

Gemäß einer weiteren sehr vorteilhaften Ausführungsform ist im Ankerkörper, und zwar vorzugsweise in dessen mittleren bis oberen Bereich, eine schlitzförmige Durchgangsöffnung vorhanden. Die gefensterte, schlitzförmige Durchgangsöffnung durchschneidet Ankerkörper und Lamellen längs, d.h. entlang der Mittelachse des Halte- und Befestigungselements. Durch den Schlitz wird die Nachgiebigkeit des Ankerteils beim Eindrücken in den zu befestigenden Körper erhöht.

Die schlitzförmige Öffnung im oberen Ankerteilbereich ist besonders vorteilhaft, wenn der Ankerkörper konisch zuläuft. Der Einpresswiderstand erhöht sich dann erst kurz vor dem vollständigen Versenken des Ankerteils im Ankergrund deutlich.

Vorteilhafterweise kann zwischen Anker und Halteteil eine wenigstens einseitig über den Anker überstehende Platte als Anschlag für das Einstecken des Ankers in den Ankergrund vorhanden sein. Diese deckt gleichzeitig die Vorbohrung nach außen vollständig ab. Die Lamellen müssen nicht bis an die Platte herangeführt sein.

Der Aufhänger wird vorzugsweise durch einen flachen Rahmen gebildet, der gleichzeitig als Griff dienen kann. Als besonders vorteilhaft wird es derzeit angesehen, den Aufhänger wie in DE 41 15 645 C2 offenbart auszuführen.

Zumindest die Lamellen des Halte- und Befestigungselements nach dieser Erfindung müssen aus einem etwas elastischen Material bestehen. Hinreichend elastisch sind z. B. alle homopolymeren für Spritzguss geeigneten Kunststoffe, sowie alle Materialien, die in ihrer Elastizität solchen Kunststoffen nahe kommen, bis hin zu Metallen.

Bevorzugt ist, dass die Lamellen aus spritzgussfähigem, also thermoplastischem Kunststoff bestehen. Geeignet sind in erster Linie thermoplastische Homopolymere, thermoplastische Copolymere oder Mischungen der vorgenannten Spritzguss-Kunststoffe.

Weiter bevorzugt ist, dass das Halte- und Befestigungselement insgesamt einstückig ausgebildet ist und vorzugsweise insgesamt aus Kunststoff besteht. Sehr bevorzugt ist es, wenn das Halte- und Befestigungselement in einem Spritzgussverfahren hergestellt wird.

Alternativ könnte das Element aus Metall bestehen und z.B. aus Metallblech geformt sein.

Im weiteren wird die Erfindung anhand eines in der Zeichnung dargestellten Ausführungsbeispiels näher beschrieben, das ausschließlich illustrativen Zwecken zum leichteren Verständnis der Erfindung dienen soll.

### In der Zeichnung zeigt

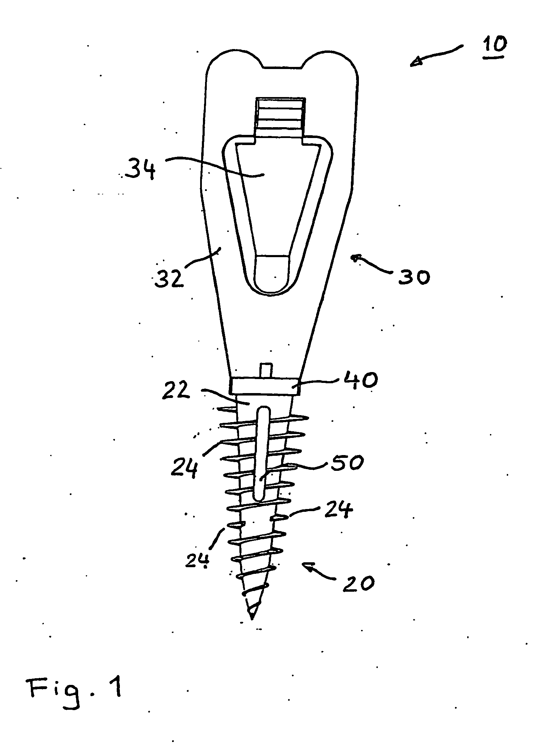

- Fig. 1: ein Ausführungsbeispiel des Halte- und Befestigungselements in Draufsicht ;

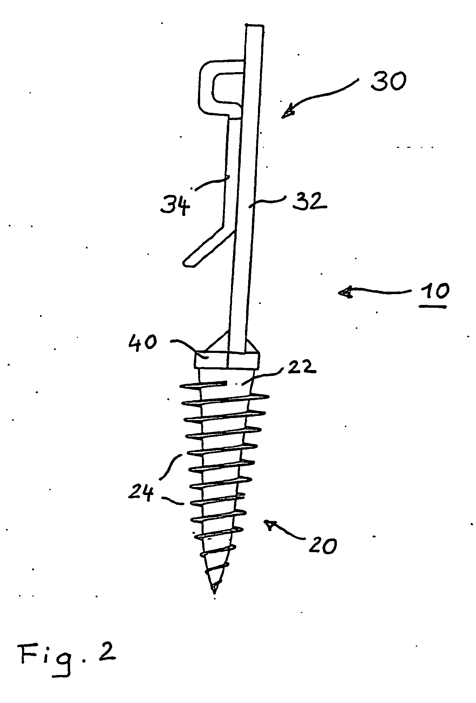

- Fig. 2: das Ausführungsbeispiel aus Fig. 1 von der Seite, d.h. um 90° um die Längsachse gedreht;

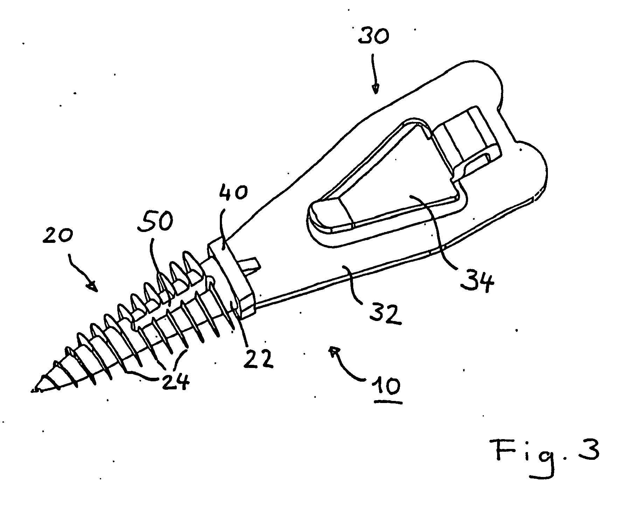

- Fig. 3: das Ausführungsbeispiel aus Fig. 1 in perspektivischer Ansicht.
Das Halte und Befestigungselement 10 besteht, wie in allen Figuren dargestellt, aus einem Ankerteil 20 und einem Halteteil 30, mit dem das Element beispielsweise an Gitterstäben eines Käfigs befestigt oder aufgehängt an dem es aber außerdem auch festgehalten werden kann. Das Ankerteil 20 besteht seinerseits aus einem konisch zulaufenden oder kegelförmigen Ankerkörper 22 und einer spiralförmig um den Ankerkörper 22 geführten Lamelle 24. Zwischen Ankerteil 20 und Halteteil 30 ist eine Platte 40 ausgeformt, die das Ankerteil 20 nach oben oder bezüglich des nicht dargestellten Futterkörpers außen hin abschließt. Das Halteteil 30 besteht aus einem flachen Rahmen 32 und einer im Ganzen mit 34 bezeichneten Federzunge. Die Federzunge 34 füllt den Rahmen 32 fast vollständig aus. Die insgesamt flache Konstruktion ermöglicht es, das Halteteil gleichzeitig als Griff zu verwenden. Das Ankerteil 20 ist in seinem oberen, zum Halteteil 30 gewandten Bereich geschlitzt, und zwar in diesem Ausführungsbeispiel in etwa über die Hälfte seiner Länge. Der Schlitz bzw. die Durchgangsöffnung 50 durchschneidet die Lamelle 24 und erleichtert das Zusammendrücken des Ankers insgesamt mit seinen Lamellen quer zur Durchgangsöffnung 50 über deren Länge.

Zur Verbesserung der Verankerung eines Halte- und Befestigungselements 10 für das Aufhängen oder Befestigen eines Futterkörpers, insbesondere eines Maiskolbens, in einem Kleintierkäfig ist demnach vorgesehen, dass das Ankerteil 20 aus einem Ankerkörper 22 und von diesem kammartig vorstehenden Lamellen 24 besteht. Durch die Lamellen, die sich beim Eindrücken des Ankers in den Futterkörper bzw. den Maiskolben nach hinten biegen, wird die Verankerung des Halte- und Befestigungselements in dem Maiskolben wesentlich verbessert. Der mit dem Anker 20 verbundene Aufhänger (Halteteil 30) kann nicht so leicht herausgezogen werden.

Das Material dieses Ausführungsbeispiels war ein homopolymeres Spritzguss-Polyolefin.

## Patentansprüche

1. Halte- und Befestigungselement (10) für das Halten, Aufhängen oder Befestigen eines Futterkörpers bestehend aus einem Anker (20) zur Verankerung des Halte- und Befestigungselements in dem Körper und einem mit dem Anker verbundenen Halteteil (30) in Form eines Griffs oder eines Aufhängers, **gekennzeichnet dadurch, dass** der Anker (20) aus einem Ankerkörper (22) und von diesem kammartig vorstehenden Lamellen (24) besteht, wobei die Lamellen (24) so ausgebildet sind, dass sie sich beim Eindrücken des Ankers (20) in den Futterkörper nach hinten biegen.

2. Halte- und Befestigungselement nach Anspruch 1, **dadurch gekennzeichnet, dass** der Ankerkörper (22) kugelförmig ausgebildet ist.

3. Halte- und Befestigungselement nach Anspruch 1 oder 2, **dadurch gekennzeichnet, dass** die Lamellen (24) durch eine spiralförmig um den Ankerkörper verlaufende Lamelle gebildet werden.

4. Halte- und Befestigungselement nach Anspruch 1 oder 2, **dadurch gekennzeichnet, dass** die Lamellen (24) um den Ankerkörper (22) ringförmig ausgebildet sind.

5. Halte- und Befestigungselement nach einem der Ansprüche 1 bis 4, **dadurch gekennzeichnet, dass** im mittleren bis oberen Bereich des Ankerkörpers (22) eine schlitzförmige Durchgangsöffnung (50) vorhanden ist.

6. Halte- und Befestigungselement nach einem der Ansprüche 1 bis 5, **dadurch gekennzeichnet, dass** zwischen Anker (20) und Halteteil (30) eine wenigstens einseitig über den Anker überstehende Platte (40) als Anschlag für das Einstecken des Ankers (20) in den Ankergrund vorhanden ist.

7. Halte und Befestigungselement nach einem der Ansprüche 1 bis 6, **dadurch gekennzeichnet, dass** das Halteteil (30) durch einen flachen Rahmen (32) gebildet wird.

8. Halte- und Befestigungselement nach einem der Ansprüche 1 bis 7, **dadurch gekennzeichnet, dass** an dem Rahmen (32) eine Federzunge (34) zur Befestigung des Halteteils (30) vorhanden ist.

9. Halte- und Befestigungselement (10) nach einem der Ansprüche 1 bis 8, **dadurch gekennzeichnet, dass** es aus einem Kunststoff oder Metallblech besteht.

10. Halte- und Befestigungselement (10) nach einem der Ansprüche 1 bis 9, **dadurch gekennzeichnet, dass** es einstückig ausgebildet und insbesondere im Spritzguss geformt ist.

## Claims

1. Holding and fastening element (10) for holding, hanging or fastening a feed body, consisting of an anchor (20) for anchoring the holding and fastening element in the body and a holding part (30), connected to the anchor, in the form of a handle or of a hanger, **characterized in that** the anchor (20) consists of an anchor body (22) and ribs (24) that project from the latter in a comb-like manner, wherein the ribs (24) are formed such that, when the anchor (20) is pushed into the feed body, they bend to the rear.

2. Holding and fastening element according to Claim 1, **characterized in that** the anchor body (22) is formed in a conical manner.

3. Holding and fastening element according to Claim 1 or 2, **characterized in that** the ribs (24) are formed by a rib that extends in a spiral around the anchor body.

4. Holding and fastening element according to Claim 1 or 2, **characterized in that** the ribs (24) are formed in an annular manner around the anchor body (22).

5. Holding and fastening element according to one of Claims 1 to 4, **characterized in that** a slot-like through-opening (50) is present in the central to upper region of the anchor body (22).

6. Holding and fastening element according to one of Claims 1 to 5, **characterized in that** a plate (40) that protrudes beyond the anchor at least on one side is present between the anchor (20) and the holding part (30), as a stop for the plugging of the anchor (20) into the anchor base.

7. Holding and fastening element according to one of Claims 1 to 6, **characterized in that** the holding part (30) is formed by a flat frame (32).

8. Holding and fastening element according to one of Claims 1 to 7, **characterized in that** a resilient tongue (34) for fastening the holding part (30) is present on the frame (32).

9. Holding and fastening element (10) according to one of Claims 1 to 8, **characterized in that** it consists of a plastics material or sheet metal.

10. Holding and fastening element (10) according to one of Claims 1 to 9, **characterized in that** it is formed in one piece and in particular is injection-moulded.

## Revendications

1. Elément de retenue et de fixation (10) pour la retenue, la suspension ou la fixation d'un corps de nourriture constitué d'un ancrage (20) pour l'ancrage de l'élément de retenue et de fixation dans le corps et d'une partie de retenue (30) connectée à l'ancrage, sous la forme d'une poignée ou d'une attache, **caractérisé en ce que** l'ancrage (20) se compose d'un corps d'ancrage (22) et de lamelles (24) saillant en forme de peigne depuis celui-ci, les lamelles (24) étant réalisées de telle sorte qu'elles se courbent vers l'arrière lors de l'enfoncement de l'ancrage (20) dans le corps de nourriture.

2. Elément de retenue et de fixation selon la revendication 1, **caractérisé en ce que** le corps d'ancrage (22) est réalisé sous forme conique.

3. Elément de retenue et de fixation selon la revendication 1 ou 2, **caractérisé en ce que** les lamelles (24) sont formées par une lamelle s'étendant en spirale autour du corps d'ancrage.

4. Elément de retenue et de fixation selon la revendication 1 ou 2, **caractérisé en ce que** les lamelles (24) sont réalisées sous forme annulaire autour du corps d'ancrage (22).

5. Elément de retenue et de fixation selon l'une quelconque des revendications 1 à 4, **caractérisé en ce que** dans la région centrale à supérieure du corps d'ancrage (22) est prévue une ouverture de passage en forme de fente (50).

6. Elément de retenue et de fixation selon l'une quelconque des revendications 1 à 5, **caractérisé en ce qu'**entre l'ancrage (20) et la partie de fixation (30) est prévue une plaque (40) saillant au moins d'un côté au-delà de l'ancrage et servant de butée pour l'enfoncement de l'ancrage (20) dans la base d'ancrage.

7. Elément de retenue et de fixation selon l'une quelconque des revendications 1 à 6, **caractérisé en ce que** la partie de retenue (30) est formée par un cadre plat (32).

8. Elément de retenue et de fixation selon l'une quelconque des revendications 1 à 7, **caractérisé en ce qu'**une langue à ressort (34) pour la fixation de la partie de retenue (30) est prévue sur le cadre (32).

9. Elément de retenue et de fixation (10) selon l'une quelconque des revendications 1 à 8, **caractérisé en ce qu'**il se compose de plastique ou de tôle métallique.

10. Elément de retenue et de fixation (10) selon l'une quelconque des revendications 1 à 9, **caractérisé en ce qu'**il est réalisé d'une seule pièce et notamment est formé par moulage par injection.
